# EUROPÄISCHE PATENTSCHRIFT

(11) **EP 0 539 774 B1**
(45) Veröffentlichungstag und Bekanntmachung des Hinweises auf die Patenterteilung: **26.06.1996**
(21) Anmeldenummer: 92117166.6
(22) Anmeldetag: 08.10.1992
(51) Int. Cl.: H02J 7/10

(54) **Vorrichtung zum Laden einer Batterie**
Device for charging a battery
Dispositif de charge d'une batterie

(30) Priorität: 30.10.1991 DE 4135769
(43) Veröffentlichungstag der Anmeldung: 05.05.1993
(73) Patentinhaber: ROBERT BOSCH GMBH, 70442 Stuttgart (DE)
(72) Erfinder: Tobias, Ralph, Dipl.-Ing., W-7141 Möglingen (DE); Spaeth, Matthias, Ing., W-7141 Möglingen (DE)

(56) Entgegenhaltungen:
- AT-B- 370 568
- DE-A- 2 051 847
- DE-A- 3 524 518
- ELECTRONICS. 21. Dezember 1978, NEW YORK US Seiten 100 - 104 R.J. BOSCHERT 'Flyback converters: solid-state solution to low-cost switching power supplies'

## Beschreibung

### Stand der Technik

Die Erfindung geht aus von einer Vorrichtung zum Laden einer Batterie, insbesondere einer Bleibatterie für Kraftfahrzeuge, nach der Gattung des Hauptanspruchs. Eine derartige Vorrichtung ist beispielsweise aus der DE-PS 34 29 673 bekannt. Die dort beschriebene Vorrichtung zum Schnelladen einer Batterie arbeitet mit mehreren Kennlinienabschnitten sowie einer zeitlichen Begrenzung des Ladevorganges sowohl in den einzelnen Ladezyklen als auch hinsichtlich der Maximalladezeit.

Weiterhin ist aus der AT-B-370 568 eine Batterieladevorrichtung bekannt, die einen Längsregelkreis mit einem Längstransistor aufweist, welcher in Abhängigkeit von der Ausgangsspannung und des Ausgangsstromes der Vorrichtung geregelt wird.

Die in diesem Dokument offenbarte Vorrichtung weist eine Vorregelund im Sekundärkreis des Transformators auf.

### Vorteile der Erfindung

Die erfindungsgemäße Ladevorrichtung mit den kennzeichnenden Merkmalen des Hauptanspruchs hat den Vorteil, daß ein Gerät mit sehr hoher elektromagnetischer Verträglichkeit (EMV) geschaffen wird, welches bei akzeptabel niedriger Verlustleistung im Ladebetrieb, insbesondere auch bei kleiner Gegenspannung der zu ladenden Batterie, mit einem geringen Bauteileaufwand preiswert und unempfindlich gegen Störungen von außen aufgebaut werden kann bei gleichzeitig sehr geringer Welligkeit (≦ ± 10 mV) der Ausgangsgleichspannung und niedriger ausgesandter HF-Störungen.

Im normalen Ladebetrieb verhindert ein Verpolschutz das Laden bei verkehrt angeschlossener Batterie und überwacht beim Laden durch zyklisches Austasten der Ladespannung mit anschließender Messung der Batteriespannung die Verbindung zur Batterie. Um das verwendete Schaltelement zu schonen, erfolgt die Austastung nur bei Unterschreiten eines vorgegebenen Grenzstromes.

Die Verpolschutz-Überwachung ist abschaltbar, um tiefentladene Batterien laden oder ein entsprechendes Gleichstromnetz, zum Beispiel das Bordnetz eines Kraftfahrzeuges, stützen zu können. In dieser Betriebsart werden polverkehrt angeschlossene Batterien als solche noch erkannt, wenn sie eine gewisse Mindest-Restspannung haben. Eine Ladung wird dann verhindert. Zusätzlich wird der Ladestrom zur Sicherheit auf einen kleinen Wert begrenzt.

Um eine Gefährdung der angeschlossenen Verbraucher, insbesondere der Bordelektronik eines Kraftfahrzeuges, durch statische oder transiente Überspannungen zu verhindern, wird dabei erfindungsgemäß mit geregelter und geglätteter Gleichspannung geladen. Hierbei findet ein Linearregler Verwendung, dessen Verlustleistung mittels überlagerter Vorregelung begrenzt wird, durch Phasenanschnittregelung im Primärkreis der Ladevorrichtung.

Anstelle einer Phasenanschnittsteuerung und Trafo könnte auch ein Schaltnetzteil verwendet werden. Als Regelgröße dient zweckmäßigerweise jeweils der Spannungsabfall am Längsregelglied.

Weitere Vorteile und Verbesserungen des Anmeldungsgegenstandes ergeben sich aus den abhängigen Ansprüchen und aus der folgenden Beschreibung eines Ausführungsbeispieles.

### Zeichnung

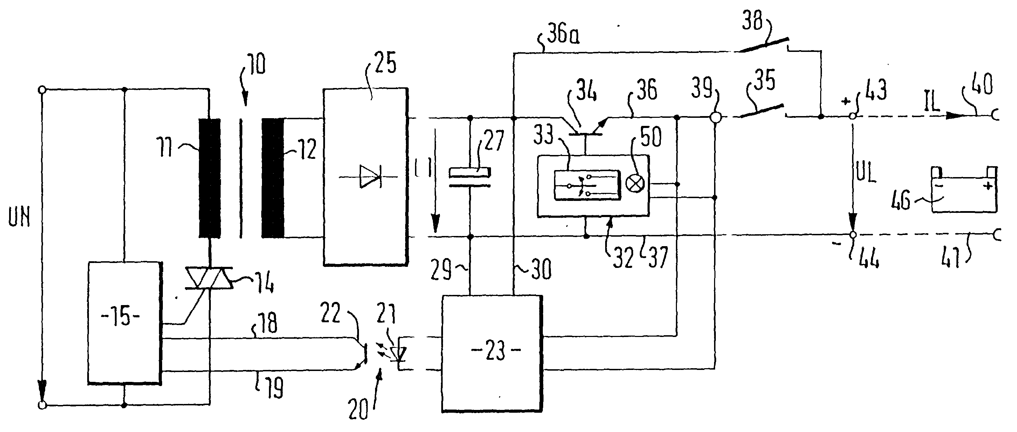

Ein Ausführungsbeispiel der Erfindung in Form eines sogenannten Längsreglers mit Verlustleistungsreduzierung durch primärseitigen Phasenanschnitt ist in der Zeichnung dargestellt und in der nachfolgenden Beschreibung näher erläutert.

### Beschreibung des Ausführungsbeispieles

In der Figur ist mit 10 ein Transformator bezeichnet, dessen Primarwicklung die Bezugsziffer 11 und dessen Sekundärwicklung die Bezugsziffer 12 tragen. In Reihe mit der Primärwicklung 11 liegt ein Triac 14, welcher von einem primärseitigen Steuergerät 15 im Phasenanschnitt gesteuert wird. Das Steuergerät 15 liegt parallel zu der Reihenschaltung aus Primärwicklung 11 und Triac 14 an der primärseitigen Netz-Wechselspannung U_{N}.

Die Steuereingänge des primärseitigen Steuergerätes 15 sind über Leitungen 18 und 19 mit einem Optokoppler 20 verbunden, welcher eine Luminiszenzdiode 21 und einen Fototransistor 22 enthält. Anode und Kathode der Luminiszenzdiode 21 sind mit dem Ausgang eines Verlustleistungs-Steuergerätes 23 verbunden, welches in Abhängigkeit von der Verlustleistung am sekundärseitigen Linearregler der Vorrichtung die primärseitig eingespeiste Leistung reduziert.

Die Sekundärseite 12 des Transformators 10 ist mit dem Eingang eines Brückengleichrichters 25 verbunden, an dessen Ausgang die gleichgerichtete Spannung U1 anliegt. Diese wird zusätzlich geglättet durch einen Glättungskondensator 27 parallel zum Ausgang des Brückengleichrichters 25. Weiterhin ist der Ausgang des Brückengleichrichters 25 über Leitungen 29 und 30 mit dem Verlustleistungs-Steuergerät 23 verbunden, an dessen Eingängen ferner die Ladespannung UL und der Ladestrom IL anliegen.

Die weitere Steuerung des Ladevorgangs erfolgt mittels einer Steuerelektronik 32, welche mit einer Ladestufen-Umschaltung 33 versehen ist, welche in einer ersten Ladestufe den normalen Ladevorgang einer Batterie und in einer zweiten Ladestufe einen Ladevorgang für eine tiefentladene Batterie, beziehungsweise einen Stützbetrieb für angeschlossene elektrische Verbraucher steuert. Die Steuerelektronik 32 ist mit dem Steuereingang eines Steuertransistors 34 verbunden, dessen Kollektor am positiven Ausgang des Brückengleichrichters 25 liegt und dessen Emitter mit einem Relaiskontakt 35 über eine Leitung 36 verbunden ist. Die zugehörige negative Leitung ist mit 37 bezeichnet. Von der Leitung 36 ist weiterhin die Ladespannung UL als erste Steuergröße und mittels eines Stromwandlers 39, der auch als Shunt ausgebildet sein kann, der Ladestrom 11 als zweite Steuergröße der Steuerelektrik 32 zugeführt.

Für den Betrieb der Ladevorrichtung als Starthilfevorrichtung sind der Steuertransistor 34 und der Relaiskontakt 35 über eine Leitung 36a und einen Schaltkontakt 38 überbrückbar.

Ladeleitungen 40 und 41 führen von der positiven Ausgangsklemme 43 und der negativen Ausgangsklemme 44 zu positiven und negativen Anschlußklemmen, welche mit einer zu ladenden Batterie 46 verbindbar sind. Schließlich ist noch eine optische Verpolschutzanzeige 50 an der Steuerelektrik 32 vorgesehen, welche bei einem polverkehrten Anschluß der Ladevorrichtung aufleuchtet.

Die beschriebene Vorrichtung arbeitet wie folgt:

Nach dem Anlegen der Netz-Wechselspannung UN fließt über die Primarwicklung 11 des Transformators 10 ein Wechselstrom, dessen Mittelwert im Phasenanschnitt durch den Triac 14 und das primärseitige Steuergerät 15 in Abhängigkeit von der sekundärseitigen Verlustleistung am Steuertransistor 34 gesteuert wird. Auf der Sekundärseite des Transformators 10 liegt hinter dem Brückengleichrichter 25 eine mittels des Kondensators 27 geglättete Sekundär-Gleichspannung Ul als Versorgungsspannung des Ladekreises an. Die Höhe der Ladespannung UL und des Ladestroms IL werden bestimmt durch die Steuerelektronik 32, welcher ein Programm für bekannte Ladecharakteristik vorgegeben wird. Diese Ladecharakteristik ist von Anwender durch Tausch eines Moduls änderbar. Beim Ausführungsbeispiel wird nach einer IU-Kennline geladen, wobei die Ladung zunächst mit einem Konstantstrom von 30 A erfolgt bis zum Erreichen der Gasungsspannung der Batterie 46. Sobald die Ladespannung UL die Gasungsspannung der Batterie, also einen Wert von 14,4 Volt bei einer Bleibatterie mit sechs Zellen erreicht hat, wird die Ladespannung UL an der Batterie konstant gehalten, der Ladestrom IL nimmt mit zunehmender Batterieladung allmählich ab.

Die Verlustleistung am Steuertransistor 34 muß begrenzt werden, damit dieser nicht überlastet wird. Im Höchstfall kann an diesem bei tiefentladener Batterie die volle Ladespannung von 14,4 Volt anliegen. Bei einem zulässigen Maximal-Ladestrom IL von 30 A würde sich für den Transistor 34 eine unzulässige Verlustleistung ergeben. Diese wird daher durch Erfassen der am Transistor 34 anliegenden Spannung über das Verlustleistungs-Steuergerät 23 begrenzt, welches mit zunehmender Spannung an der Kollektoremitterstrecke des Transistors 34 über den Optokoppler 20 und das primärseitige Steuergerät 15 den Strom auf der Primärseite des Transformators 10 durch Phasenanschnittssteuerung mittels des Triacs 14 reduziert.

Die Steuerelektronik 32 kann mittels der Ladestufen-Umschaltung 33 auf zwei verschiedene Ladestufen manuell umgeschaltet werden. In der ersten, sogenannten Normal-Ladestufe kann eine Batterie 46, welche noch eine Restspannung im unbelasteten Zustand von mindestens 0,5 V aufweist, nach einem vorgegebenen Ladeprogramm geladen werden.

Dieses Ladeprogramm ist in der Steuerelektronik 32 integriert und kann je nach gewünschten Ladevorgang ausgetauscht werden. Im vorliegenden Fall werden mittels des Stromwandlers 39 und eines Spannungsabgriffs am Ausgang des Steuertransistors 34 Ladestrom und Ladespannung gemessen und in der bereits geschilderten Weise geregelt auf einen maximalen, konstanten Ladestrom von 30 A, welcher erst nach dem Erreichen der Gasungsspannung der Batterie, die nicht überschritten werden darf, allmählich abklingt. Gleichzeitig erfolgt mittels des Spannungsabgriffes am Emitter des Steuertransistors 34 auch eine Überwachung des polrichtigen Anschlusses der Batterie 46, beziehungsweise der Klemmen 43 und 44. Diese Überwachung des polrichtigen Anschlusses der Batterie ist möglich bis zu einer Restspannung derselben von mindestens 0,5 Volt.

Eine zweite Ladestufe wird manuell mittels der Ladestufenumschaltung 33 aktiviert. Diese zweite Ladestufe dient entweder zum Laden einer tiefentladenen Batterie 46 oder zur Spannungsversorgung von an die Batterie anschließbaren Verbrauchern, wobei der Ladestrom IL in der zweiten Ladestufe auf einen niedrigen Wert, hier auf einen Wert 1,5 A begrenzt wird. Der Verpolschutz ist in der zweiten Ladestufe unterhalb der vorgegebenen Mindest-Restspannung von 0,5 V außer Betrieb, schützt aber dennoch falsch gepolte Batterien, soweit die von der Batterie eingespeiste Spannung -0,5 V unterschreitet.

Die Anfangsladung tiefentladener Batterien 46 ist durch die Strombegrenzung in der zweiten Ladestufen schonend möglich. Nach Formatierung der Batterie 46 und Erreichen einer stabilen Gegenspannung ist die Rückschaltung auf Normalbetrieb, das heißt auf die erste Ladestufe möglich.

Im sogenannten Stützbetrieb der zweiten Ladestufe kann nach vorherigem polrichtigem Anschluß an einen Verbraucher, insbesondere zum Beispiel an ein Kraftfahrzeug-Bordnetz, die Versorgung verschiedener Kleinverbraucher erfolgen, während die Batterie zwischenzeitlich abgeklemmt oder ganz entfernt werden kann. Dieser sogenannte Stützbetrieb ist wesentlich, da ein Teil der im Kraftfahrzeug eingesetzten Elektronik ständig am Bordnetz verbleibt. Hierzu zählen beispielsweise Eigenkontrolle, stabilisierte Betriebszustände, Timer und flüchtige Speicher.

Andererseits kommt es durch diese dauernd angeschlossenen Verbraucher bei längerer Ruhezeit des Kraftfahrzeuges auch zur Tiefentladung der Batterie 46. In dieser Situation ist die Erkennung der Polarität durch Spannungsmessung problematisch, da die Batterie unter Umständen nur noch ein minimales Spannungspotential aufweist. Durch die zweite Ladestufe kann nun einerseits eine tiefentladene Batterie für das Längsregelglied verlustarm wieder aufgeladen werden und andererseits erhält man eine Ersatzstromquelle mit begrenzter Leistung, wodurch sich eine Unterbrechung in der Bordnetzversorgung, beispielsweise bei Reparaturen und Installationsarbeiten am Bordnetz, überbrücken läßt.

Die Einspeisung im Stützbetrieb der zweiten Ladestufe kann entweder über die Ladeklemmen an den Ladeleitungen 40, 41 oder alternativ über eine separate Leitung mit Stecker an der Bordsteckdose eines Kfz es erfolgen, so daß der Zugang zur Batterie 46 nicht behindert ist. Aufgrund der Leistungsbegrenzungs-Regelung ist auch die Gefahr von Folgeschäden durch Funken oder Kurzschlüsse während Reparatur-Arbeiten gering.

Voraussetzung für die problemlose Versorgung elektrischer, insbesondere elektronischer Verbraucher ist eine entsprechend geglättete Gleichspannung UL, die statisch und transient innerhalb enger Toleranzen liegt. Dies wird bei der erfindungsgemäßen Vorrichtung erreicht durch den verwendeten Linearregler mit dem Steuertransistor 34, dessen Verlustleistung durch eine überlagerte Vorregelung mittels Phasenanchnittssteuerung auf der Primärseite des Transformators 10 begrenzt ist. Als Regelgröße für die Vorregelung dient die Verlustleistung oder der Spannungsabfall am Linearglied, welcher auf einen Wert von max. 2 V begrenzt und beim Überschreiten dieses Wertes durch eine Reduzierung des Stromflußwinkels auf der Primärseite heruntergeregelt wird.

Um eine Unterbrechung in der Batterie 46 oder den Zuleitungen 40, 41 zu erkennen, wird die Ladespannung UL zyklisch für eine kurze Zeit ausgestastet und in dieser Zeit die außenliegende Spannung gemessen. Liegt außen keine Spannung an, so könnte die Ladezange von der Batterie 46 abgefallen sein. Um einer Funkenbildung entgegenzuwirken, wird die Ladespannung UL nicht mehr auf die Ladeleitung geschaltet. Um dabei das Schaltelement zu entlasten, erfolgt die Tastung nur unterhalb eines vorgegebenen Grenzstroms.

## Patentansprüche

1. Vorrichtung zum Laden einer Batterie, insbesondere einer Bleibatterie für Kraftfahrzeuge, vorzugsweise im eingebauten Zustand, mit einem Transformator (10), dessen Ladespannung (UL) und/oder Ladestrom (IL) überwacht und hierbei die Verlustleistung eines sekundärseitigen Längsregelgliedes (34) durch ein Verlustleistungs-Steuergerät (23) geregelt und im Ladebetrieb bei verminderter Gegenspannung der Batterie (46) und/oder erhöhter Netzspannung begrenzt Wird, dadurch gekennzeichnet, daß die Nerlustleistung des sekundärseitigen Längsregelgliedes (34) zusätzlich durch eine überlagerte Vorregelung (14, 15) im Primärstromkreis (11) des Transformators (10) begrenzt wird, welche ein Steuergerät (15) für ein Stellglied (14) aufweist, wobei dem primärseitigen Steuergerät (15), das an der primärseitigen Netz-Wechselspannung liegt, als Eingangsregelgröße die Ausgangsgröße des sekundärseitigen Verlustleistungs-Steuergerätes (23) zugeführt wird.

2. Vorrichtung nach Anspruch 1, dadurch gekennzeichnet, daß die Verlustleistung des Längsregelgliedes (34) durch eine Phasenanschnittsteuerung (14, 15) im Primärstromkreis (11) begrenzt ist.

3. Vorrichtung nach Anspruch 1 oder 2, dadurch gekennzeichnet, daß als Regelgröße für die primärseitige Spannungsbegrenzung (14, 15) der Spannunqsabfall am Längsregelglied (34) dient.

4. Vorrichtung nach einem der vorhergehenden Ansprüche, dadurch gekennzeichnet, daß der Spannungsabfall am Längsregelglied (34) auf einen Wert < 2 Volt begrenzt ist.

5. Vorrichtung nach einem der vorhergehenden Ansprüche, dadurch gekennzeichnet, daß zur Starthilfe für ein Kraftfahrzeug das Längsregelglied (34) kurzgeschlossen ist.

6. Vorrichtung nach einem der vorhergehenden Ansprüche, dadurch gekennzeichnet, daß zur Starthilfe für ein Kraftfahrzeug der Stromflußwinkel der primärseitigen Strombegrenzung auf seinen Maximalwert eingestellt ist.

## Claims

1. Device for charging a battery, in particular a lead battery for motor vehicles, preferably in the installed state, having a transformer (10) whose charge voltage (UL) and/or charge current (IL) is monitored and, during this process, the power loss of a secondary-side in-phase regulator (34) is regulated by means of a power-loss control device (23) and limited during charging mode with reduced back-e.m.f. of the battery (46) and/or increased mains voltage, characterized in that the power loss of the secondary-side in-phase regulator (34) is additionally limited by a superimposed preregulator (14, 15) in the primary circuit (11) of the transformer (10), which preregulator (14, 15) has a control device (15) for a final controlling element (14), the output variable of the secondary-side power-loss control device (23) being fed, as input regulation variable, to the primary-side control device (15) which is connected to the primary-side alternating mains voltage.

2. Device according to Claim 1, characterized in that the power loss of the in-phase regulator (34) is limited by a phase controller (14, 15) in the primary circuit (11).

3. Device according to Claim 1 or 2, characterized in that the voltage drop at the in-phase regulator (34) serves as a regulation variable for the primary-side voltage limitation (14, 15).

4. Device according to one of the preceding claims, characterized in that the voltage drop at the in-phase regulator (34) is limited to a value < 2 volts.

5. Device according to one of the preceding claims, characterized in that the in-phase regulator (34) is short-circuited to provide assistance to a motor vehicle in starting.

6. Device according to one of the preceding claims, characterized in that, in order to provide assistance to a motor vehicle in starting, the angle of current flow of the primary-side current limitation is set to its maximum value.

## Revendications

1. Dispositif pour charger une batterie, notamment une batterie au plomb, de véhicule automobile, de préférence montée dans le véhicule, comprenant un transformateur (10) dont on surveille la tension de charge (UL) et/ou l'intensité de charge (IL), tandis qu'on régule la perte en puissance d'un élément de régulation de durée (34) du côté du primaire par un appareil de commande de perte de puissance (23) et, en mode de charge, pour une contre-tension réduite de la batterie (46), et/ou en cas de tension de réseau plus forte, on limite la perte en puissance, caractérisé en ce qu'on limite en outre la perte de puissance de l'élément de régulation de durée (34) du côté du secondaire par une régulation combinée en amont (14, 15) dans le circuit primaire (11) du transformateur (10), qui comporte un appareil de commande (15) pour un organe de régulation (14), l'appareil de commande (15) du côté du primaire, relié à la tension alternative du réseau du côté primaire, recevant comme grandeur de régulation d'entrée, la grandeur de sortie de l'appareil de commande de perte de puissance (23) du secondaire.

2. Dispositif selon la revendication 1, caractérisé en ce que la perte de puissance de l'élément de regulation de durée (34) est limitée par une commande de découpage de phase (14, 15) montée dans le circuit de courant primaire (11).

3. Dispositif selon la revendication 1 ou 2, caractérisé en ce que, comme grandeur de régulation pour limiter la tension (14, 15) du côté du primaire, on utilise la chute de tension sur l'élément de régulation de durée (34).

4. Dispositif selon l'une des revendications précédentes, caractérisé en ce qu'on limite la chute de tension sur l'élément de régulation de durée (34) à une valeur inférieure à 2 volts.

5. Dispositif selon l'une des revendications précédentes, caractérisé en ce que, pour l'aide au démarrage d'un véhicule automobile, on court-circuite l'élément de régulation de durée (34).

6. Dispositif selon l'une des revendications précédentes, caractérisé en ce que, pour l'aide au démarrage d'un véhicule automobile, on règle à une valeur maximale l'angle de passage du courant de la limitation de courant du côté du primaire.
